# EUROPÄISCHE PATENTSCHRIFT

(11) **EP 2 045 109 B1**
(45) Veröffentlichungstag und Bekanntmachung des Hinweises auf die Patenterteilung: **18.08.2010**
(21) Anmeldenummer: 08017452.7
(22) Anmeldetag: 05.10.2008
(51) Int. Cl.: B60J 7/12, B60J 7/185, B60J 1/18

(54) **Faltverdeck eines Kraftfahrzeugs**
Folding roof for a motor vehicle
Toit repliable pour véhicule automobile

(30) Priorität: 03.10.2007 DE 102007047456
(43) Veröffentlichungstag der Anmeldung: 08.04.2009
(73) Patentinhaber: Webasto AG, 82131 Stockdorf (DE)
(72) Erfinder: Hörmann, Andreas, 83137 Schonstett (DE); Miklosi, Stefan, 81247 München (DE); Haussmann, Jochen, 82346 Andechs (DE)
(74) Vertreter: Konnerth, Dieter Hans

(56) Entgegenhaltungen:
- EP-B- 1 123 220
- WO-A-2006/079313
- DE-A1- 4 203 228
- DE-A1- 4 309 607
- DE-A1- 10 029 473
- DE-A1- 10 102 643
- DE-B- 1 179 125
- DE-C1- 10 211 625

## Beschreibung

Die Erfindung betrifft ein Faltverdeck eines Kraftfahrzeugs mit den Merkmalen des Oberbegriffs des Anspruchs 1.

Aus der DE 1 179 125 A ist ein gattungsgemäßes Faltverdeck bekannt geworden, bei dem ein Rahmen eines Heckfensters seitlich jeweils über eine Lagereinrichtung mit zwei sich scherenartig überkreuzen angeordneten Hebeln bewegbar gelagert ist. Dabei ist der eine Hebel im Bereich eines karosserieseitigen Schwenkgelenks einer bei geschlossenem Verdeck in etwa senkrecht angeordneten Dachrahmenstange schwenkbar und der andere Hebel an dieser Dachrahmenstange mittels eines Schlittens verschiebbar und auch verschwenkbar gelagert.

Aus der WO 2006/079313 A1 ist ein Faltverdeck bekannt geworden, das in seiner Ablagestellung im heckseitigen Bereich des Fahrzeugs von einer Arretiereinrichtung festgelegt ist. Die Arretiereinrichtung weist ein Verriegelungselement auf, das karosserieseitig schwenkbar gelagert und über eine Steuerstange mit einem Verdeckkastendeckel bewegungsgekoppelt ist. Das Verriegelungselement ist mit einem Bolzen verriegelbar, der an einem Lagerhebel eines hinteren Dachteils des Verdecks angebracht ist.

Aus der EP 1 123 220 B1 ist ein Faltverdeck bekannt geworden, das an seitlichen Dachholmen eines Fahrzeugs verschiebbar gelagert und in eine heckseitige Ablagestellung bewegbar ist. Eine Heckscheibe ist in einer Kassette aufgenommen, die bei geöffnetem Faltverdeck vom Fahrzeugdach entnommen werden kann. Bei geöffnetem und entnommenem Faltverdeck können auch die lösbar angebrachten Dachholme entnommen werden.

Aus der DE 102 11 625 C1 ist ein Faltverdeck mit einer als Festglasscheibe gebildeten Heckscheibe bekannt geworden, die mittels Schwenkhebeln in Viergelenkanordnung an der Karosserie bewegbar gelagert ist und beim Ablegen des Verdecks in den Verdeckkasten abgesenkt wird.

Das aus der DE 43 09 607 A1 bekannte Faltverdeck enthält eine verstellbare Heckscheibe, die beidseits über jeweils zwei Stützglieder an einer hinteren Spannstange gelagert ist. Die hintere Spannstange ist einerseits an einem hinteren Verdeckspannbügel und andererseits an einer vorderen Spannstange angelenkt. In Schließstellung des Verdecks nehmen die beiden Spannstangen eine Übertotpunktlage ein und spannen damit die Heckscheibe gegen den inneren Rand der Hecköffnung des Verdeckbezugs.

Schließlich zeigt die DE 100 29 473 A1 ein Faltverdeck mit einer festen Heckscheibe, die beidseits über zwei Schwenklenker in Viergelenkanordnung mit dem Verdeckgestell bzw. einem hinteren Verdeckspannbügel bewegbar verbunden ist.

Der Erfindung liegt die Aufgabe zugrunde, ein eingangs genanntes Faltverdeck zu schaffen, das eine verbesserte Heckscheibenlagerung aufweist.

Die Aufgabe wird erfindungsgemäß durch ein Faltverdeck mit den Merkmalen des Anspruchs 1 gelöst.

Vorteilhafte Ausgestaltungen der Erfindung sind in den abhängigen Ansprüchen angegeben.

Durch diese modifizierte Viergelenkanordnung der beiden Lenker wird ein verbessertes Bewegungsverhalten der Heckscheibe erzielt. Das Kofferraumvolumen wird nicht eingeschränkt, da das Bewegungsverhalten es ermöglicht, dass die abgelegte Heckscheibe im wesentlichen in horizontaler Ausrichtung über einer Hutablage zu liegen kommt.

Vorzugsweise ist der Schlitten zumindest in Schließrichtung der Heckscheibe angetrieben. Durch das Antreiben des Schlittens kann dieser über den daran gelagerten Lenker bei geschlossenem Faltverdeck eine betriebssichere und in dem Verdeckstoff gespannte Anordnung der Heckscheibe erreicht werden. Insbesondere wenn die Heckscheibe nur teilweise mit dem Verdeckstoff fest verbunden ist, kann der Schlitten über den Lenker die nötige Vorspannkraft zur dichten Anlage der Heckscheibe am Verdeckstoff bereitstellen. Der Schlitten kann den Lenker insbesondere in eine Totpunktstellung bringen, so dass eine Bewegung der geschlossenen Heckscheibe vermieden werden kann.

Somit ist eine vollautomatische Bewegung und Ablage der Heckscheibe über die kinematische Kette des Faltverdecks und über den Faltverdeckantrieb möglich. Des weiteren ist eine einfache Montage des Dachsystems am Fahrzeug möglich. Insbesondere lässt sich ein großes Faltverdeck mit integrierter Heckscheibe vom Windlauf bis zur Gürtellinie im Heckbereich bilden. Die Heckscheibe ist über ein Lenker- und Schlittensystem in einer Führungsschiene gesteuert und über einen zweiten drehbar gelagerten Hebel in der Führungsschiene abgestützt. Der Schlitten kann während des Schließvorganges in einer bestimmten kinematischen Position des Verdeckstoffes angetrieben bzw. gezogen werden. Dadurch wird die Heckscheibe gemäß der Kinematik bewegt. Der Schlitten und dessen Lenkerverbindung zur Heckscheibe kommt in die Normalposition zur Führungsschiene bei der Abstützung der geschlossenen Heckscheibe. Durch die lineare Bewegung des Schlittens und die Kopplung über Verriegelungen zur Führungsschiene kann die stabile Lage der Heckscheibe gesichert werden. Die Heckscheibe wird automatisch über den Antrieb in die Endablageposition horizontal auf die Hutablage gelegt. In dieser Position ist sie gleichzeitig über einen Crashfanghaken gegen eine Verschiebung nach vorne gesichert.

Nachfolgend wird die Erfindung anhand eines Ausführungsbeispiels des Faltverdecks unter Bezugnahme auf die Zeichnung näher erläutert. Es zeigt:
- Fig. 1: in einer perspektivischen Draufsicht die linke hintere Hälfte eines Fahrzeugs mit einem Faltverdeck und einer bewegbar gelagerten Heckscheibe, die in Schließstellung und in Ablagestellung dargestellt ist;
- Fig. 2: in einer Seitenansicht in schematischer Darstellung die in Schließstellung angeordnete Heckscheibe mit ihrer Lagerung;
- Fig. 3: in einer perspektivischen Innenansicht die in Schließstellung angeordnete Heckscheibe mit ihrer Lagerung;
- Fig. 4: in einer perspektivischen Innenansicht die in Ablagestellung angeordnete Heckscheibe mit ihrer Lagerung vor einem Fanghaken einer Crashsicherung; und
- Fig. 5: in einer Seitenansicht die in Ablagestellung angeordnete Heckscheibe mit ihrer Lagerung vor dem Fanghaken der Crashsicherung.

Ein Fahrzeug 1 enthält ein Faltverdeck 2, das an seitlichen Dachholmen 3, die auch C-Säulen umfassen können, verschiebbar gelagert ist und in bekannter Weise zwischen einer den Fahrzeuginnenraum überdeckenden Schließstellung und einer den Fahrzeuginnenraum freigebenden Offen- oder Ablagestellung, in der es eine heckseitige Ablagestellung einnimmt, manuell oder mittels eines Antriebs verstellbar ist. Ein Fahrzeug mit einem derartigen Faltverdeck ist z. B. in der EP 1 123 220 B1 offenbart, wobei die Dachholme 3 ein fester Bestandteil der Fahrzeugkarosserie sein können oder alternativ auch an der Karosserie bewegbar gelagert und z. B. in eine Ablageposition verstellt werden können oder bei in Ablagestellung angeordnetem Faltverdeck vom Fahrzeug entnommen werden können. Beispiele für Fahrzeuge mit Faltverdecken an ablegbaren Holmen oder Gestängen zeigen die DE 42 03 228 A1 und die DE 101 02 643 A1.

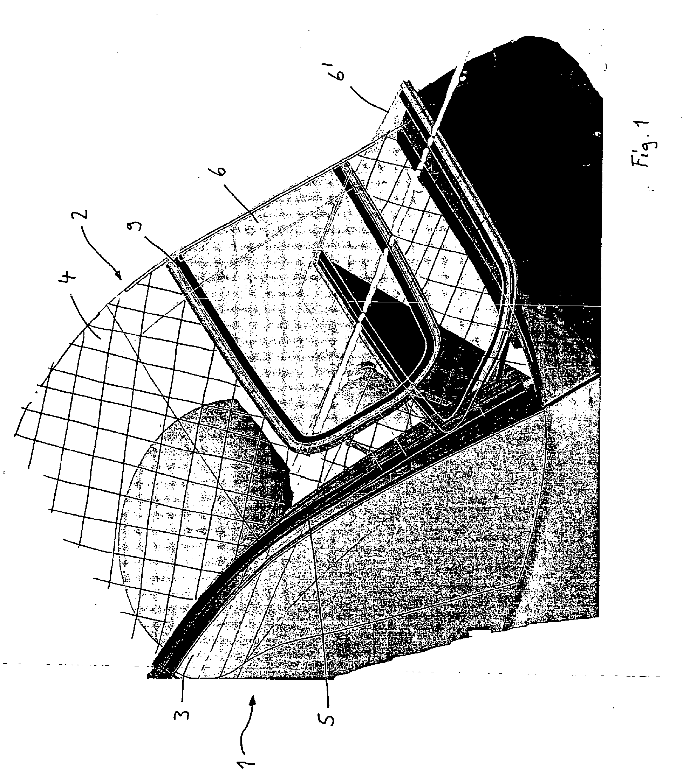

Das Faltverdeck 2 enthält einen flexiblen Verdeckbezug oder Verdeckstoff 4 (in Fig. 1 nur schematisch angedeutet), der von Querspriegeln gehalten ist, die beidseits an Führungen 5 verschiebbar gelagert sind, die an den beiden Dachholmen 3 ausgebildet oder angebracht sind. Die Führungen sind beispielsweise Führungsschienen, die an den Innenseiten der Dachholme 3 angeordnet sind und in vertikaler Draufsicht in Längsebenen verlaufen, wohingegen die Dachholme 3 in vertikaler Draufsicht gekrümmt verlaufen können.

Eine Heckscheibe 6 ist mittels einer seitlich jeweils einen ersten oberen Lenker 7 und einen zweiten unteren Lenker 8 aufweisenden Lenkereinrichtung bewegbar gelagert. Der erste obere Lenker 7 ist einerseits an einem umlaufenden Scheibenrahmen 9 der Heckscheibe 6 in einem Schwenklager 10 und andererseits an einem Gleiter oder Schlitten 11 in einem Schwenklager 12 angelenkt, wobei der Schlitten 11 an einer am Dachholm 3 angeordneten Führungsbahn 13 einer Führungsschiene 14 verschiebbar aufgenommenen ist, die mit der Führung 5 der Querspriegel übereinstimmen kann oder neben dieser Führung 5 gebildet sein kann.

Der zweite oder untere Lenker 8 der Lenkereinrichtung ist einerseits am Scheibenrahmen 9 der Heckscheibe 6 in einem Schwenklager 15 und andererseits an einem Schwenklager 16 angelenkt, das dach- oder karosserieseitig ortsfest und insbesondere an einem Trägerteil 17 angeordnet ist, das z. B. an der Führungsschiene 14 innenseitig befestigt ist und auf einem sich in Fahrtrichtung nach vorne erstreckenden Abschnitt das Schwenklager 16 trägt.

Das Trägerteil 17 enthält des weiteren einen Fanghaken 18 einer Crashsicherung für die in Ablagestellung angeordnete Heckscheibe 6. Der Fanghaken 18 ist an einem oberen vorderen Abschnitt des Trägerteils 17 gebildet und nach hinten geöffnet und zur Aufnahme einer zapfenartigen Verlängerung 19 der Schwenkachse des Schwenklagers 10 vorgesehen.

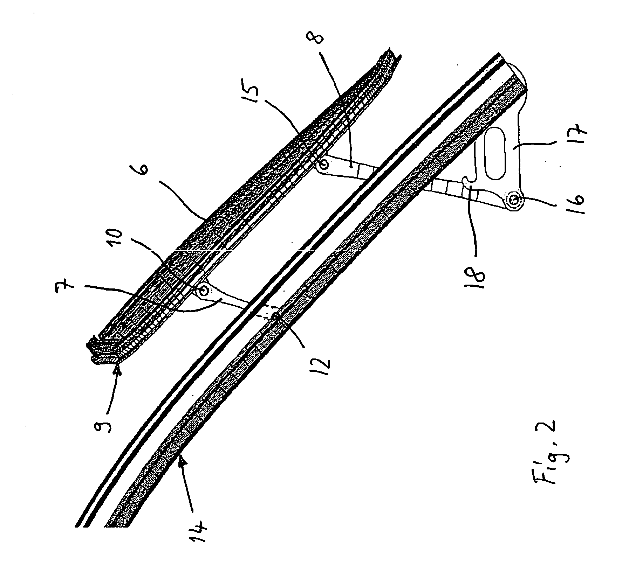

Die Heckscheibe 6 ist bei geschlossenem Faltverdeck 2 in einer Öffnung des Verdeckstoffes 4 angeordnet und lediglich in ihrer unteren Hälfte über ihren Scheibenrahmen 9 mit dem Verdeckstoff 4 fest verbunden. Der gespannte Verdeckstoff 4 zieht die Heckscheibe 6 in ihre Schließstellung gemäß Fig. 2, während der Schlitten 11 durch eine Antriebseinrichtung nach oben bis in die Stellung der Fig. 2 oder noch weiter bis in eine Totpunktstellung des oberen Lenkers 7, in der dieser senkrecht zur Führungsbahn 13 steht, gezogen ist und damit den oberen Rand der Heckscheibe 6 sowie die obere Hälfte ihrer seitlichen Ränder dicht gegen den oberen Rand des Verdeckstoffes 4 an der Öffnung für die Heckscheibe 6 sowie die entsprechenden seitlichen oberen Hälften der beiden Ränder des Verdeckstoffes 4 andrückt.

Der Antriebseinrichtung zum Verschieben des Schlittens 11 beim Schließen des Faltverdecks 2 kann ein Zugkabel sein, das an der Führungsbahn 13 aufgenommen ist und mit einem der Querspriegel des Faltverdecks 2 verbunden ist, so dass dieser nach vorne bewegte Querspriegel den Schlitten 11 mitnimmt. Die Antriebseinrichtung kann auch einen Antriebsmotor aufweisen, der über ein entsprechendes Zugkabel mit dem Schlitten 11 verbunden ist.

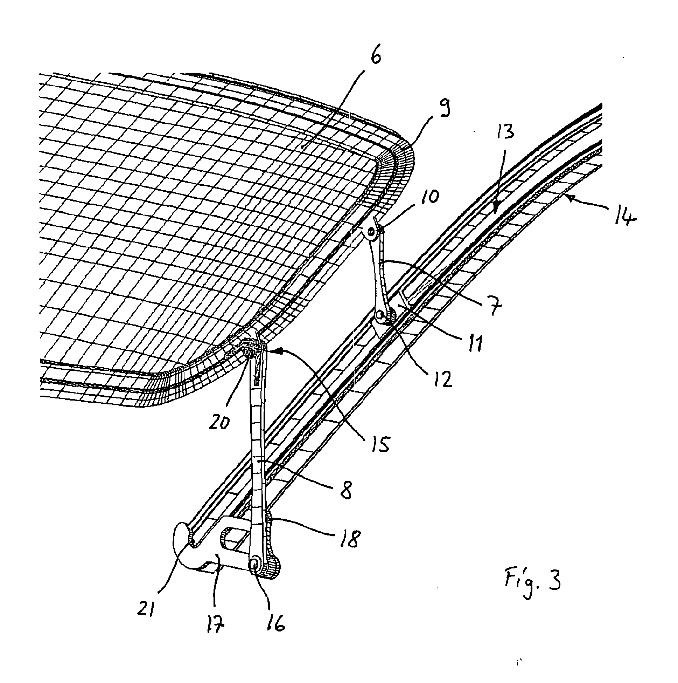

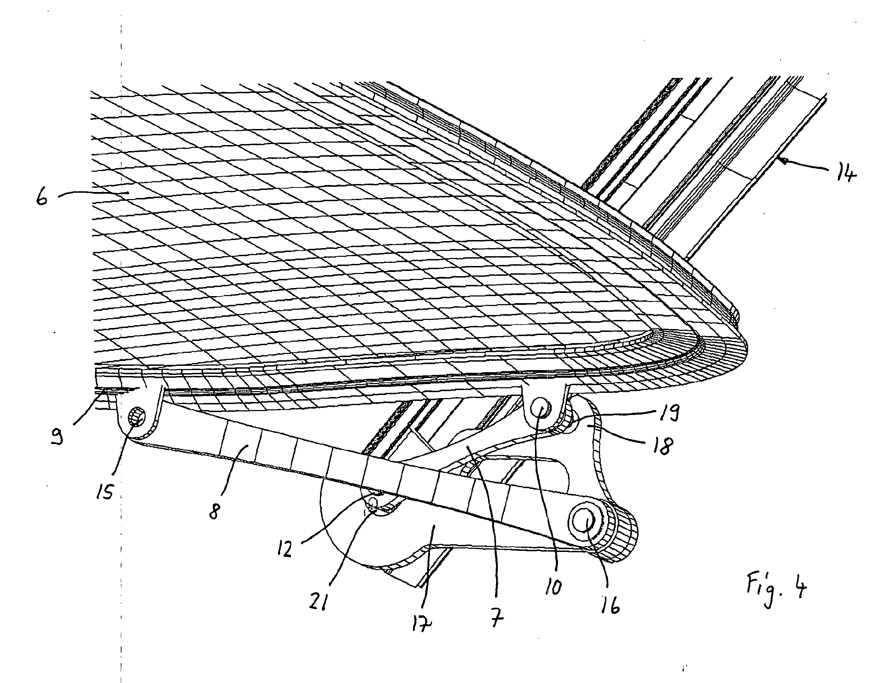

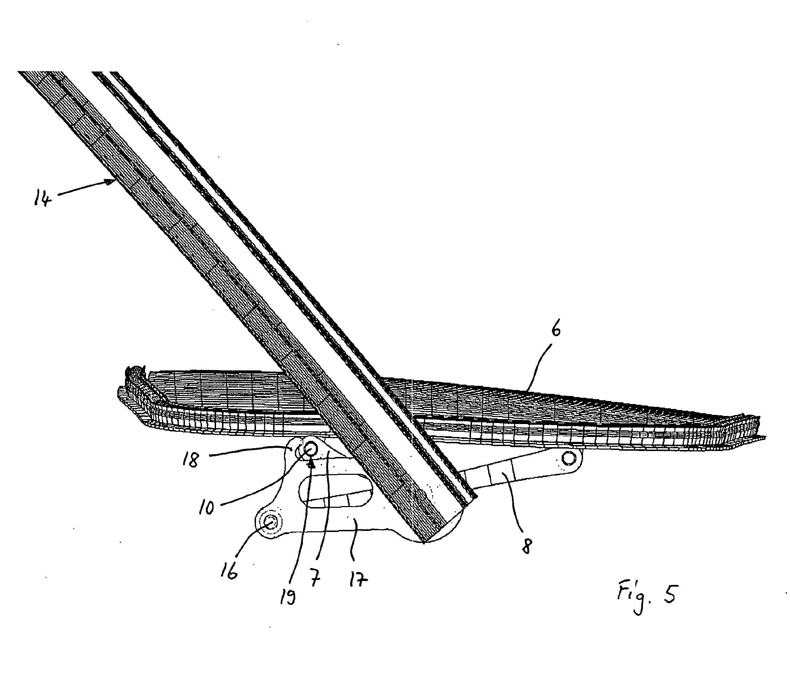

Beim Öffnen und Überführen des Faltverdecks 2 in seine heckseitige Ablagestellung wird die Heckscheibe 6 von der Stellung gemäß den Fig. 2 und 3 in die Stellung gemäß den Fig. 4 und 5 überführt (in Fig. 1 ist die geöffnete abgelegte Heckscheibe mit Bezugszeichen 6' bezeichnet). Die Heckscheibe 6 löst sich an ihrer oberen Hälfte von dem Verdeckbezug 4, der sich hierdurch platzsparend an der Heckscheibe 6 in Falten legen kann.

Wenn sich beim Öffnen des Faltverdecks 2 der Verdeckbezug 4 entspannt und er über die Querspriegel nach hinten bewegt wird, kann die Heckscheibe 6 aufgrund ihrer Gewichtskraft über die beiden Lenker 7 und 8 nach hinten und unten verschwenken, bis sie z. B. eine annähernd horizontale Position über einem heckseitigen Kofferraum einnimmt. Zur Unterstützung der Öffnungsbewegung der Heckscheibe 6 kann eine Schenkelfeder 20 vorgesehen sein, die z. B. am oberen Schwenklager 15 des unteren Hebels 8 angeordnet ist und deren Federkraft in Öffnungsrichtung wirkt.

In der Offen- oder Ablagestellung der Heckscheibe 6 liegt das Schwenklager 12 des oberen Lenkers 7 in einer Ausnehmung 21 des Trägerteils 17 an, so dass eine definierte Ablagestellung der Heckscheibe 6 erzielt wird.

In der Offen- oder Ablagestellung der Heckscheibe 6 ist des weiteren die Verlängerung 19 des Schwenklagers 10 in dem Bereich vor der Öffnung des Fanghakens 18 angeordnet. In einem Crashfall könnte bei übergroßen Beschleunigungskräften die Heckscheibe 6 horizontal in Fahrtrichtung nach vorne relativ zu den umgebenden Bauteilen verlagert werden. Um zu verhindern, dass durch eine nach vorne schnellende Heckscheibe 6 Fahrzeuginsassen gefährdet oder verletzt werden könnten, wird die Verlängerung 19 in dem Fanghaken gedrückt und darin sicher aufgenommen. Damit wird eine weitere Vorwärtsbewegung der Heckscheibe 6 sicher unterbunden.

Das Schließen des Faltverdecks 2 und der Heckscheibe 6 verläuft in entgegengesetztem Bewegungsablauf.

Die in der Beschreibung und anhand der Ausführungsbeispiele offenbarten einzelnen Merkmale können in beliebigen technisch zweckmäßigen Anordnungen und Gestaltungen mit dem jeweiligen Erfindungsgegenstand in seiner allgemeinen Form kombiniert werden.

### Bezugszeichenliste

- 1: Fahrzeug
- 2: Faltverdeck
- 3: Dachholm
- 4: Verdeckstoff
- 5: Führung
- 6: Heckscheibe
- 7: oberer Lenker
- 8: unterer Lenker
- 9: Scheibenrahmen
- 10: Schwenklager
- 11: Schlitten
- 12: Schwenklager
- 13: Führungsbahn
- 14: Führungsschiene
- 15: Schwenklager
- 16: Schwenklager
- 17: Trägerteil
- 18: Fanghaken
- 19: Verlängerung
- 20: Schenkelfeder
- 21: Ausnehmung

## Patentansprüche

1. Faltverdeck eines Kraftfahrzeugs, das an dachseitigen Führungen bewegbar gelagert ist, einen Verdeckbezug und eine Heckscheibe aufweist und zwischen einer Schließstellung und einer heckseitigen Ablagestellung verstellbar ist,
wobei die Heckscheibe (6) mittels einer zumindest zwei Lenker (7, 8) aufweisenden Lenkereinrichtung bewegbar gelagert ist, wobei ein erster Lenker (7) der Lenkereinrichtung einerseits an der Heckscheibe (6) und andererseits an einem an einer dachseitigen Führungsbahn (13) verschiebbar aufgenommenen Schlitten (11) angelenkt ist und ein zweiter Lenker (8) der Lenkereinrichtung einerseits an der Heckscheibe (6) und andererseits an einem dach- oder karosserieseitig im wesentlichen ortsfesten Schwenkgelenk (16) angelenkt ist,
und wobei sich der mit dem ersten Lenker (7) verbundene Schlitten (11) beim Verstellen der Heckscheibe (6) entlang der Führungsbahn (13) bewegt,
**dadurch gekennzeichnet,**
**dass** der erste Lenker (7) ein oberer Lenker und der zweite Lenker (8) ein unterer Lenker ist.

2. Faltverdeck nach Anspruch 1,
**dadurch gekennzeichnet, dass** der Schlitten (11) zumindest in Schließrichtung der Heckscheibe (6) angetrieben ist.

3. Faltverdeck nach Anspruch 1 oder 2,
**dadurch gekennzeichnet, dass** der Schlitten (11) mit einem an einer Führung bzw. der Führungsbahn (13) verschiebbaren Lagerteil des Faltverdecks (2) zumindest für die Schließbewegung der Heckscheibe (6) gekoppelt ist.

4. Faltverdeck nach einem der Ansprüche 1 bis 3,
**dadurch gekennzeichnet, dass** die Heckscheibe (6) beim Ablegen des Faltverdecks (2) aufgrund ihrer Gewichtskraft und/oder durch eine Antriebseinrichtung in ihre Offen- oder Ablagestellung bewegbar ist.

5. Faltverdeck nach Anspruch 4,
**dadurch gekennzeichnet, dass** die Antriebseinrichtung eine Federeinrichtung (20) aufweist, die zwischen der Heckscheibe (6) und einem der Lenker (8) angeordnet ist.

6. Faltverdeck nach einem der Ansprüche 1 bis 5,
**dadurch gekennzeichnet, dass** die Heckscheibe (6) bei geschlossene Faltverdeck (2) in einer Öffnung des Verdeckbezugs (4) angeordnet ist und zumindest an einem Randabschnitt, insbesondere an ihrem unteren Randabschnitt, mit dem Verdeckbezug (4) fest verbunden ist.

7. Faltverdeck nach einem der Ansprüche 1 bis 6,
**dadurch gekennzeichnet, dass** die Heckscheibe (6) einen Scheibenrahmen (9) aufweist, an dem die Lenker (7, 8) angelenkt sind und mit dem der Verdeckbezug (4) fest verbunden ist.

8. Faltverdeck nach einem der Ansprüche 1 bis 7,
**dadurch gekennzeichnet, dass** die Lenker (7, 8) an einem seitlichen Rand der Heckscheibe (6), insbesondere an einem Scheibenrahmen (9), angelenkt sind.

9. Faltverdeck nach einem der Ansprüche 1 bis 8,
**dadurch gekennzeichnet, dass** die dachseitigen Führungen (13) an festen oder an bewegbaren Dachholmen (3) des Kraftfahrzeugs angeordnet sind.

10. Faltverdeck nach einem der Ansprüche 1 bis 9,
**dadurch gekennzeichnet, dass** die Heckscheibe (6) in Ablagestellung im wesentlichen horizontal angeordnet ist.

11. Faltverdeck nach einem der Ansprüche 1 bis 10,
**dadurch gekennzeichnet, dass** die Heckscheibe (6) in Ablagestellung von einer im Crashfall aktiven Crashsicherung (18, 19) gegen eine Relatiwerlagerung nach vorne zum Fahrgastraum hin gehalten ist.

12. Faltverdeck nach einem der Ansprüche 1 bis 11,
**dadurch gekennzeichnet, dass** bei abgelegter Heckscheibe (6) einer der Lenker (8) der Lenkereinrichtung eine Bereitschaftsstellung einnimmt, in der ein am Lenker (8) vorgesehenes Eingriffselement (19) im Bereich eines dach- oder karosserieseitig angeordneten Fanghakens (18) angeordnet ist und in einem Crashfall die nach vorne zum Fahrgastraum bewegte und insbesondere horizontal ausgerichtete Heckscheibe (6) mit dem Lenker (8) derart bewegt wird, dass das Eingriffselement (19) im Fanghaken (18) aufgenommen ist und dadurch eine weitere Bewegung der Heckscheibe (6) zum Fahrgastraum hin verhindert ist.

## Claims

1. Folding roof for a motor vehicle, which is mounted movably on roof-side guides, has a folding-roof cloth and a rear window and is displaceable between a closed position and a storage position at the rear,
wherein the rear window (6) is mounted movably by means of a link device having at least two links (7, 8), wherein a first link (7) of the link device is coupled at one end to the rear window (6) and at the other end to a slide (11) held displaceably on a roof-side guide track (13), and a second link (8) of the link device is coupled at one end to the rear window (6) and at the other end to a substantially positionally fixed pivot joint (16) on the roof side or body side,
and wherein the slide (11) which is connected to the first link (7) moves along the guide track (13) during the displacement of the rear window (6),
**characterized in that** the first link (7) is an upper link, and the second link (8) is a lower link.

2. Folding roof according to Claim 1, **characterized in that** the slide (11) is driven at least in the closing direction of the rear window (6).

3. Folding roof according to Claim 1 or 2, **characterized in that** the slide (11) is coupled, at least for the closing movement of the rear window (6), to a bearing part of the folding roof (2), which bearing part is displaceable on a guide or the guide track (13).

4. Folding roof according to one of Claims 1 to 3, **characterized in that**, when the folding roof (2) is being put away, the rear window (6) is movable into the open or storage position thereof owing to the weight thereof and/or by means of a driving device.

5. Folding roof according to Claim 4, **characterized in that** the driving device has a spring device (20) which is arranged between the rear window (6) and one of the links (8).

6. Folding roof according to one of Claims 1 to 5, **characterized in that**, when the folding roof (2) is closed, the rear window (6) is arranged in an opening in the folding-roof cloth (4) and is fixedly connected at least at one edge section, in particular at the lower edge section thereof, to the folding-roof cloth (4).

7. Folding roof according to one of Claims 1 to 6, **characterized in that** the rear window (6) has a window frame (9) to which the links (7, 8) are coupled and to which the folding-roof cloth (4) is fixedly connected.

8. Folding roof according to one of Claims 1 to 7, **characterized in that** the links (7, 8) are coupled to a lateral edge of the rear window (6), in particular to a window frame (9).

9. Folding roof according to one of Claims 1 to 8, **characterized in that** the roof-side guides (13) are arranged on fixed or on movable roof pillars (3) of the motor vehicle.

10. Folding roof according to one of Claims 1 to 9, **characterized in that** the rear window (6) is arranged substantially horizontally in the storage position.

11. Folding roof according to one of Claims 1 to 10, **characterized in that**, in the storage position, the rear window (6) is held by a crash protection means (18, 19) which is active in the event of a crash preventing a relative shift forwards towards the passenger compartment.

12. Folding roof according to one of Claims 1 to 11, **characterized in that**, when the rear window (6) is put away, one of the links (8) of the link device assumes a standby position in which an engagement element (19) provided on the link (8) is arranged in the region of a catch hook (18) arranged on the roof side or body side and, in the event of a crash, the rear window (6) which moves forwards towards the passenger compartment and in particular is aligned horizontally is moved by the link (8) in such a manner that the engagement element (19) is received in the catch hook (18) and, as a result, further movement of the rear window (6) towards the passenger compartment is prevented.

## Revendications

1. Toit repliable pour un véhicule automobile qui est disposé de façon mobile au niveau de guides situés côté toit, comporte une housse de toit et une vitre arrière et peut être déplacé entre une position fermée et une position rangée située côté arrière ;
la vitre arrière (6) étant disposée de façon mobile à l'aide d'un dispositif à bras de liaison comportant au moins deux bras de liaison (7, 8), un premier bras de liaison (7) du dispositif à bras de liaison étant articulé d'une part au niveau de la vitre arrière (6) et d'autre part au niveau d'un coulisseau (11) logé de façon coulissante au niveau du rail de guidage (13) situé côté toit et un deuxième bras de liaison (8) du dispositif à bras de liaison étant articulé d'une part à la vitre arrière (6) et d'autre part à un pivot (16) pour l'essentiel fixe sur place et situé côté toit ou carrosserie ; et
le coulisseau (11) relié au premier bras de liaison (7) se déplaçant en cas de déplacement de la vitre arrière (6) le long du rail de guidage (13) ;
**caractérisé en ce que** le premier bras de liaison (7) est un bras de liaison supérieur et que le deuxième bras de liaison (8) est un bras de liaison inférieur.

2. Toit repliable selon la revendication 1, **caractérisé en ce que** le coulisseau (11) est entraîné au moins dans la direction de fermeture de la vitre arrière (6).

3. Toit repliable selon la revendication 1 ou 2, **caractérisé en ce que** le coulisseau (11) est couplé à une partie de palier du toit repliable (2) pouvant être déplacée au niveau d'un guide et/ou du rail de guidage (13), au moins pour le mouvement de fermeture de la vitre arrière (6).

4. Toit repliable selon l'une quelconque des revendications 1 à 3, **caractérisé en ce que** la vitre arrière (6) peut être déplacée dans sa position ouverte ou rangée lors du rangement du toit repliable (2) soit du fait de son poids propre et/ou soit de l'action d'un dispositif d'entraînement.

5. Toit repliable selon la revendication 4, **caractérisé en ce que** le dispositif d'entraînement comporte un dispositif de ressort (20) disposé entre la vitre arrière (6) et un des bras de liaison (8).

6. Toit repliable selon l'une quelconque des revendications 1 à 5, **caractérisé en ce que** la vitre arrière (6) est disposée dans une ouverture de la housse de toit (4) lorsque le toit repliable (2) est fermé et est reliée fixement à la housse de toit (4) au moins au niveau d'un segment de bord, notamment au niveau de son segment de bord inférieur.

7. Toit repliable selon l'une quelconque des revendications 1 à 6, **caractérisé en ce que** la vitre arrière (6) comporte un cadre de vitre (9) au niveau duquel les bras de liaison (7, 8) sont articulés et reliés fixement à la housse de toit (4).

8. Toit repliable selon l'une quelconque des revendications 1 à 7, **caractérisé en ce que** les bras de liaison (7, 8) sont articulés au niveau d'un bord latéral de la vitre arrière (6), notamment au niveau d'un cadre de vitre (9).

9. Toit repliable selon l'une quelconque des revendications 1 à 8, **caractérisé en ce que** les guides (13) situés côté toit sont disposés au niveau d'une traverse de toit (3) fixe ou mobile du véhicule automobile.

10. Toit repliable selon l'une quelconque des revendications 1 à 9, **caractérisé en ce que** la vitre arrière (6) est disposée pour l'essentiel horizontalement en position rangée.

11. Toit repliable selon l'une quelconque des revendications 1 à 10, **caractérisé en ce que** la vitre arrière (6) est maintenue en position rangée par une fixation antichoc (18, 19) active en cas d'accident pour empêcher son mouvement relatif vers l'avant en direction de l'habitacle.

12. Toit repliable selon l'une quelconque des revendications 1 à 11, **caractérisé en ce que** lorsque la vitre arrière (6) est rangée, un des bras de liaison (8) du dispositif à bras de liaison prend une position de disponibilité dans laquelle un dispositif de mise en prise (19) situé au niveau du bras de liaison (8) est disposé dans la zone d'un crochet (18) disposé côté toit ou carrosserie et qu'en cas d'accident, la vitre arrière (6) est déplacée vers l'avant en direction de l'habitacle et orientée notamment horizontalement avec le bras de liaison (8) de telle sorte que le dispositif de mise en prise (19) s'emboîte dans le crochet d'attelage (18), empêchant ainsi tout mouvement supplémentaire de la vitre arrière (6) en direction de l'habitacle.
